# EUROPEAN PATENT APPLICATION

(11) **EP 1 376 574 A2**
(43) Date of publication of application: **02.01.2004**
(21) Application number: 03253755.7
(22) Date of filing: 13.06.2003
(51) Int. Cl.: G11B 20/00

(54) **Information detecting device and recording apparatus**

(30) Priority: 19.06.2002 JP 2002178507
(71) Applicant: SONY CORPORATION, Tokyo 141 (JP)
(72) Inventor: Akita, Mamoru, c/o IP Department, Shinagawa-ku, Tokyo 141 (JP)
(74) Representative: Turner, James Arthur

(57) **Abstract**

An information detecting circuit for detecting whether copyright protecting information inserted in recording data is illegal or not is provided. The information detecting circuit is provided so as to detect recording data modulated by a predetermined modulating circuit. When the information detecting circuit determines that the copyright protecting information is illegal, at least the illegal copyright protecting information is prevented from being recorded on a recording medium as it is. With such a configuration, when the detecting operation of the information detecting circuit is performed on a hardware level, the possibility of illegal data copying by altering software, for example, can be eliminated completely.

## Description

The present invention relates to an information detecting device and a recording apparatus.

As optical disks in a DVD (Digital Versatile Disk) format, optical disks allowing digital information to be recorded by users, such for example as DVD-R, DVD+RW, and DVD-RW, have recently spread. With the spread of such optical disks, disk drive apparatus that can perform recording and reproduction on the optical disks in the DVD format have also spread.

As is well known, media in the DVD format have a relatively large capacity of about 4.7 GB, for example. Therefore, not only audio data such for example as music but also high-volume video data typified by a movie or the like can be readily recorded as contents.

Considering the spread of data recordable media in the DVD format as described above, it can be said that it is very important from a viewpoint of protecting intellectual property rights (copyrights) to prevent illegal copying of contents of images, music, and the like recorded on DVD-ROMs, for example.

DVD standards define CPR_MAI as a signal for copyright protection. CPR_MAI for example has a size of six bytes, and is inserted at a predetermined position in recording data. An area as CPR_MAI stores information on permission/prohibition of reproduction/duplication or the like according to the definition.

By referring to the information of CPR_MAI, a disk drive apparatus supporting DVD determines whether the disk may be reproduced or not.

When data as CPR_MAI is illegally altered at the time of recording, however, illegal copy disks can be created. Thus, application software and disk drive apparatus supporting recording on recordable disks in the DVD format, for example, are configured with a mechanism that prevents general users from freely rewriting the contents of CPR_MAI.

However, there is no denying a possibility that a malicious user, for example, would alter CPR_MAI to perform illegal copying even by breaking such a mechanism. Therefore, the mechanism for preventing the rewriting of CPR_MAI needs to be as strong as possible.

Accordingly, a disk drive apparatus, for example, in the current state is generally configured as follows.

Even if a request for recording data with illegal CPR_MAI inserted therein is made from a host side, the disk drive apparatus is configured so as not to record the data as it is on a disk in response to the request when the disk drive apparatus determines that the contents of the CPR_MAI are illegal. Specifically, the disk drive apparatus is configured with a function of prohibiting the recording of the contents data, masking the contents data or the like when detecting that the contents of the CPR_MAI are illegal. Such a configuration prevents general users from creating illegal disks.

Such a function is generally implemented by software. Specifically, a CPU within the disk drive apparatus executes a program stored in an internal ROM, for example. It can be said that such a configuration is able to prevent illegal copying unless the internally stored program is altered.

Many disk drive apparatus used included in or connected to a personal computer, in particular, as disk drive apparatus supporting DVD use a flash ROM for a microcomputer for control.

The flash ROM is used in consideration of convenience for general users, and is usually intended to allow updating of a control program. As an actual example, a corrected program (update) is released on the Internet by the maker, vendor, or the like. A general user downloads the corrected program and installs the program in the disk drive apparatus to perform the update. Thereby for example a defect caused by a bug is corrected, or a new function is added.

Such a function, however, can be a weakness as viewed from a viewpoint of preventing the alteration of the above-mentioned copyright protecting information (CPR_MAI).

That is, it cannot be said that there is no possibility at all of a malicious user analyzing the downloaded program, altering the program, and installing the program in the disk drive apparatus. In this case, when the program is altered so that the disk drive apparatus can copy data even when CPR_MAI indicates copy prohibition, illegally copied disks can be created.

There has recently been an increase in the number of not only above-mentioned CPUs but also built-in LSIs that are operated by embedded software. Therefore, when a malicious user analyzes and alters the software, illegal operation can be similarly performed. Thus, in the present situation, it cannot be said that there is no possibility of illegal copying by altering the program.

In actuality, analyzing software involves great difficulty. Even if the analysis can be made, it is more difficult to create software that effects illegal operation. That is, even in the present situation, illegal copying by altering the software is not easy. In addition, the analysis may be made even more difficult by a method of encrypting the program or the like.

However, the creation of illegal software is merely very difficult, and there is no guarantee that the creation of illegal software is impossible. In other words, it cannot be said that there is no possibility of a few of malicious users creating illegal software. In the recent situation, once illegal software is created, it is possible to distribute instantly the illegal software to all parts of the world on the Internet or the like. That is, there is an environment in which the illegal software is widely and readily available to general users. When consequently illegal copying is widely performed also by general users, copyrights are correspondingly greatly injured.

In view of these problems, solider technical measures to prevent illegal copying need to be taken with an objective of making copyright protection more secure.

Various respective aspects and features of the invention are defined in the appended claims. Features from the dependent claims may be combined with features of the independent claims as appropriate and not merely as explicitly set out in the claims.

Thus, in view of the above problems, according to the present invention, there is first provided an information detecting device included as follows.

The information detecting device includes: input means for inputting recording information modulated by a modulating circuit; and an information detecting circuit for detecting whether copyright protecting information inserted in a predetermined position of the recording information inputted by the input means has a predetermined content.

Further, a recording apparatus is included as follows.

The recording apparatus includes: a modulating circuit for subjecting input recording information to predetermined modulation processing; an information detecting circuit for receiving the recording information modulated by the modulating circuit and performing an operation for detecting whether copyright protecting information inserted in a predetermined position of the recording information has a predetermined content; recording means for recording the recording information inputted through a recording signal path including the modulating circuit onto a predetermined recording medium; and an information recording limiting circuit for prohibiting the recording of recording information in which illegal copyright protecting information is inserted onto the recording medium by the recording means, according to a detection result of the information detecting circuit.

With each of the above configurations, the recording apparatus for recording information onto a recording medium, for example, includes the information detecting circuit for detecting whether copyright protecting information inserted in a predetermined position of the recording information has a predetermined content. The recording apparatus also limits the recording of information onto the recording medium according to a detection result of the information detecting circuit.

The information detecting circuit is provided in a stage succeeding the modulating circuit, and further the information detecting circuit itself can be formed as hardware. With such a configuration, the detection operation on the copyright protecting information by the information detecting circuit and the operation of limiting the recording of information onto the recording medium according to a detection result of the information detecting circuit can be realized by processing by software or can be realized by only circuit operation by hardware, for example.

As described above, the present invention has an information detecting circuit for detecting whether copyright protecting information inserted in recording data (information for recording) is illegal. The information detecting circuit performs the detection on recording data modulated by a predetermined modulating circuit.

When the information detecting circuit determines that the copyright protecting information is illegal, at least the illegal copyright protecting information is prevented from being recorded on a recording medium as it is.

With such a configuration, when the detecting operation of the information detecting circuit is performed on a hardware level, the possibility of illegal data copying by altering software, for example, can be eliminated completely.

When the information detecting circuit is formed as hardware, the recording of the illegal copyright protecting information by modifying the hardware is also made impossible, depending on a method of mounting the information detecting circuit.

Further, the illegality detection on the modulated recording data means that as viewed from a recording data input side, the illegality detection is performed at a part of a recording signal path near to the recording medium side and distant from the input side. This greatly raises a degree of difficulty in recording illegal copyright protecting information.

Thus, the present invention can prevent creation of illegally copied recording media by recording illegal copyright protecting information much more firmly than conventional.

The invention will now be described by way of example wit reference to the accompanying drawings, throughout which like parts are referred to by like references, and in which:
FIG. 1 is a block diagram showing an example of configuration of a disk drive apparatus as an embodiment of the present invention;
FIG. 2 is a block diagram showing an example of configuration of an illegality detecting circuit in the embodiment;
FIG. 3 is a block diagram showing an example of configuration of another illegality detecting circuit;
FIG. 4 is a data structure diagram showing structure of sector data;
FIG. 5 is a data structure diagram showing structure of recording data after EFM+ modulation; and
FIG. 6 is a diagram of assistance in explaining a position of Data ID, IED, and CPR_MAI within the structure of the recording data after the EFM+ modulation.

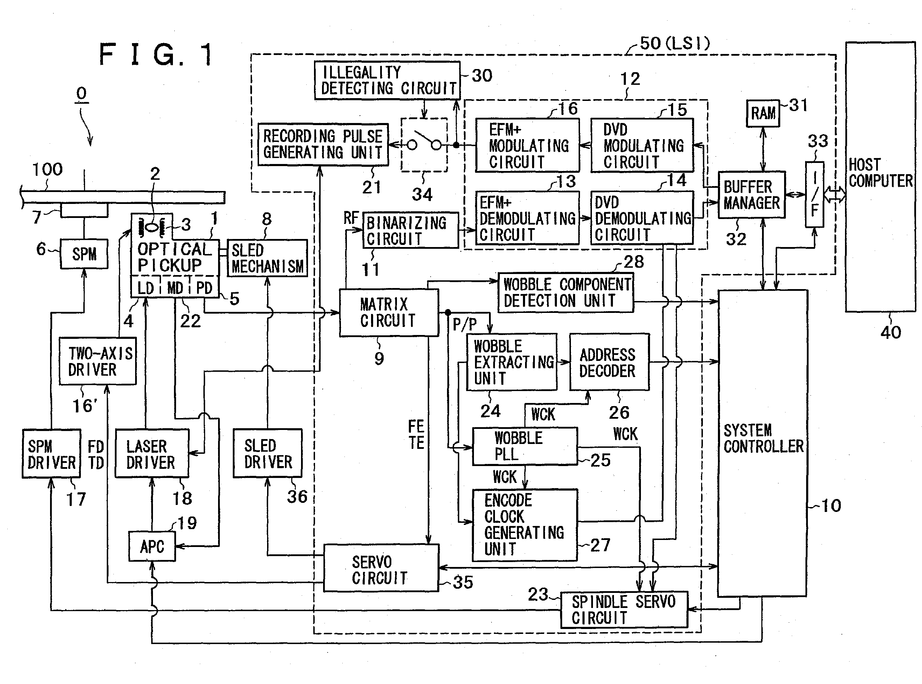

FIG. 1 shows a configuration of a disk drive apparatus 0 as an embodiment of the present invention. The disk drive apparatus 0 shown in FIG. 1 is configured to be able to record and reproduce data on a recordable disk such for example as DVD-R, DVD-RW, DVD-RAM, or the like as an optical disk in a DVD format.

A disk 100 is loaded onto a turntable 7, and is driven by a spindle motor 6 to be rotated by a predetermined rotation control system (CAV [Constant Angular Velocity], CLV [Constant Linear Velocity], ZCLV [Zoned Constant Linear Velocity], or the like) at the time of recording/reproducing operation. Then an optical pickup 1 reads pit data and track wobbling information recorded on a track on the disk 100. Pits recorded as data on the track formed as a groove are so-called dye change pits or phase change pits.

Formed within the pickup 1 are: a laser diode 4 serving as a laser light source; a photodetector 5 for detecting reflected light; an objective lens 2 at an output end of laser light; and an optical system (not shown) for irradiating a recording surface of the disk with the laser light via the objective lens 2 and guiding the reflected light to the photodetector 5.

Also, a monitoring detector 22 for receiving a part of the output light from the laser diode 4 is provided within the pickup 1.

The objective lens 2 is held by a two-axis mechanism 3 so as to be movable in a tracking direction and a focus direction.

The optical pickup 1 as a whole is movable in a direction of the radius of the disk by a sled mechanism 8.

The laser diode 4 in the pickup 1 is driven by a drive signal (drive current) from a laser driver 18 to emit laser light.

The photodetector 5 detects reflected light information from the disk 100, converts the reflected light information into an electric signal corresponding to an amount of light received, and then supplies the electric signal to a matrix circuit 9.

The matrix circuit 9 has a current-voltage conversion circuit, a matrix calculation/amplification circuit, and the like for output currents from a plurality of light receiving elements as the photodetector 5. The matrix circuit 9 generates necessary signals by matrix calculation processing.

For example, the matrix circuit 9 generates an RF signal corresponding to reproduced data, a focus error signal FE and a tracking error signal TE for servo control, a push-pull signal P/P, and the like.

The RF signal outputted from the matrix circuit 9 is supplied to a binarizing circuit 11; the focus error signal FE and the tracking error signal (push-pull signal) TE are supplied to a servo circuit 35; and the push-pull signal P/P is supplied to a wobble extracting unit 24 and a wobble PLL 25.

The matrix circuit 9 also outputs a signal for detecting a wobble component leaking into the reproduced RF signal to a wobble component detecting unit 28. As will be described later, the signal for detecting the wobble component is the reproduced RF signal or the reflected light information signal before addition for obtaining the reproduced RF signal.

The wobble component detecting unit 28 detects the wobble component leaking into the reproduced RF signal, and then supplies a result of the detection to a system controller 10.

The push-pull signal P/P is binarized and demodulated as ADIP information by the wobble extracting unit 24, and then supplied to an address decoder 26. The address decoder 26 decodes preformatted address information. The decoded address information is supplied to the system controller 10.

A wobble clock WCK is generated from the push-pull signal P/P by PLL operation in the wobble PLL 25. The wobble clock WCK is supplied to an encode clock generating unit 27, the address decoder 26, and a spindle servo circuit 23.

The RF signal obtained by the matrix circuit 9 is binarized by the binarizing circuit 11, and then supplied to an encode/decode unit 12.

The encode/decode unit 12 has a functional part as a decoder at the time of reproduction and a functional part as an encoder at the time of recording. The functional part as a decoder at the time of reproduction includes an EFM+ demodulating circuit 13 and a DVD demodulating circuit 14, as shown in FIG. 1. The functional part as an encoder at the time of recording includes a DVD modulating circuit 15 and an EFM+ modulating circuit 16.

The reproduced signal binarized by the binarizing circuit 11 is in a form of a so-called EFM+ signal that is recording-encoded by an EFM+ system (8/16 modulation, RLL [2, 10]). The EFM+ signal is first inputted to the EFM+ demodulating circuit 13 in the encode/decode unit 12 at the time of reproduction. The EFM+ demodulating circuit 13 performs synchronous detection for the EFM+ signal inputted thereto, and performs demodulation processing for recording-encoding in accordance with the EFM+ system.

The signal demodulated by the EFM+ demodulating circuit 13 is inputted to the DVD demodulating circuit 14.

The DVD demodulating circuit 14 performs processing such as error correction processing and descrambling in accordance with a DVD data format, and obtains reproduced data of a structure in accordance with a DVD format.

The EFM+ demodulating circuit 13 in the encode/decode unit 12 generates a reproduced clock in synchronism with the RF signal by operation of a PLL circuit provided therewithin. The EFM+ demodulating circuit 13 performs the above decode processing on the basis of the reproduced clock.

The data decoded as described above by the encode/decode unit 12 at the time of the reproduction is outputted to a buffer manager 32. The buffer manager 32 effects memory control to temporarily store the reproduced data outputted from the encode/decode unit 12 in a buffer memory 31.

The data buffered in the buffer memory 31 is read and transferred as a reproduced output from the disk drive apparatus 0.

An interface unit 33 is connected to an external host computer 40 to communicate recording data, reproduced data, various commands, and the like between the interface unit 33 and the host computer 40.

At the time of reproduction, a necessary amount is read from the reproduced data temporarily stored in the buffer memory 31 by the buffer manager 32, and then transferred to the data interface unit 33. The data interface unit 33 subjects the reproduced data transferred thereto to processing such as packetizing according to a predetermined data interface format, for example, and then transmits and outputs the resulting reproduced data to the host computer 40.

Incidentally, read commands, write commands, and other signals from the host computer 40 are supplied to the system controller 10 via the interface unit 33.

At the time of recording, on the other hand, recording data is transmitted from the host computer 40 via a data bus. The interface unit 33 receives the recording data, and then subjects the recording data to processing such as un-packetizing, thereby converting the recording data to a form of recording data that can be processed on the disk drive apparatus 0 side. The recording data is written to the buffer memory 31 by control of the buffer manager 32 and thereby buffered in the buffer memory 31. The buffer manager 32 reads data from the buffer memory 31 according to processing conditions of an encoder system in the encode/decode unit 12 in a succeeding stage, and then transfers the data to the encoder system in the encode/decode unit 12.

As described above, the encoder system in the encode/decode unit 12 includes the DVD modulating unit 15 and the EFM+ modulating unit 16.

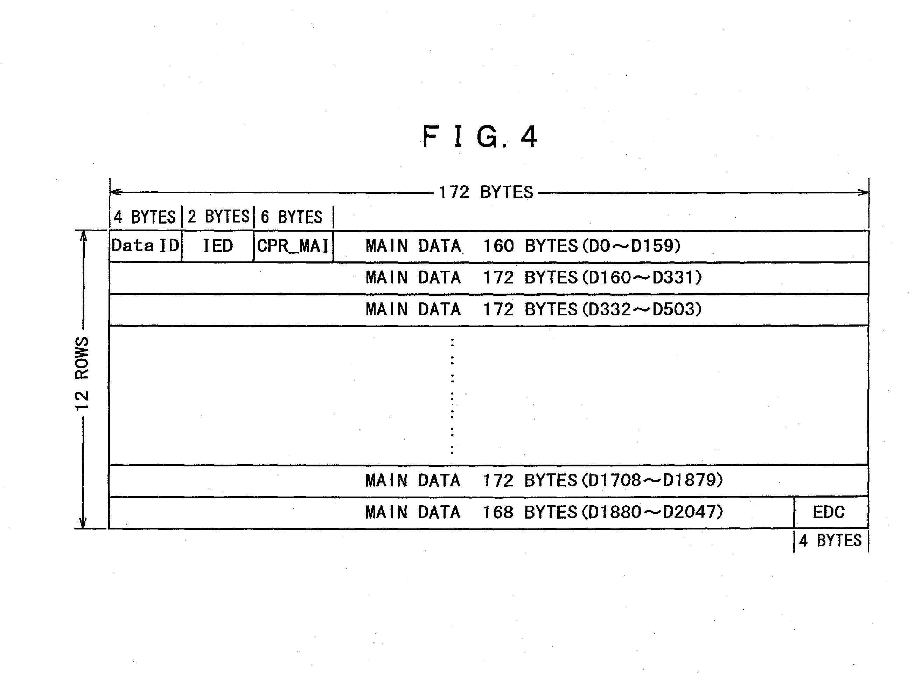

FIG. 4 shows a data structure of a sector unit defined by the DVD format. As shown in FIG. 4, a sector has a size of 172 bytes × 12 rows = 2064 bytes. Data ID is disposed in first four bytes of a first row. IED (ID Error Detection) is disposed in a next two-byte area. Data ID stores ID information of the present sector. IED is error detection code for Data ID.

CPR_MAI, or copyright protecting information, is stored in a next six-byte area. Though detailed description of a data structure of CPR_MAI will be omitted, the CPR_MAI stores information on permission/prohibition of reproduction and permission/prohibition of duplication of data of a present data frame and the like. According to the definition, each bit forming the six bytes is "0" when copying is permitted.

When data to be recorded by the disk drive apparatus 0 is illegal, for example (when the data to be recorded by the disk drive apparatus 0 is data read from another DVD, for example), a CPR_MAI value different from (ALL0), which value is recorded in the source data, is to be recorded as it is, in principle.

EDC (Error Detection Code), which is error detection code for the present sector as a whole, is disposed in last four bytes of a 12th row.

Data (D0 to D2047) is stored in a remaining 2048-byte area.

The DVD modulating circuit 15 receives data in a sector unit of the above structure as recording data, performs scrambling and addition of error correction code (ECC encoding), and then outputs the result to the EFM+ modulating circuit 16.

The EFM+ modulating circuit 16 adds a synchronizing signal to the recording data inputted thereto, and performs EFM+ modulation processing on the recording data.

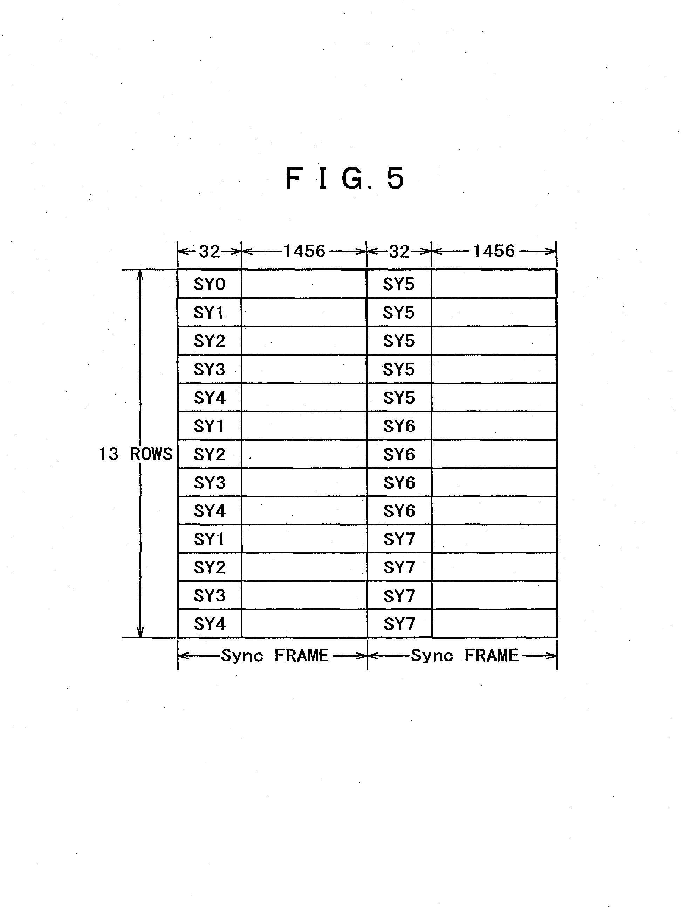

The recording data obtained by the EFM+ modulation has a structure as shown in FIG. 5. As shown in FIG. 5, the data after the EFM+ modulation includes a set of 13 rows with one row formed by a sequence of two sync frames.

One sync frame has a structure in which one of 32-bit sync codes SY0 to SY7 (synchronizing signals) is added to a head of a data frame of 182 bytes (1456 bits). In this case, data frames of 182 + 182 = 364 bytes forming one row are obtained by subjecting a data frame shown earlier in FIG. 4 to scrambling and ECC encode processing.

Description returns to FIG. 1.

The encode clock generating unit 27 generates an encode clock serving as a reference clock for the encode processing at the time of recording. The encode processing system (the DVD modulating circuit 15 and the EFM+ modulating circuit 16) in the encode/decode unit 12 performs the encode processing using the encode clock.

The encode clock generating unit 27 generates the encode clock on the basis of the wobble clock WCK supplied from the wobble PLL 25.

The recording data generated by the encode processing system in the encode/decode unit 12 in this case is outputted to a recording pulse generating unit 21 via a switch 34.

In the case of the present embodiment, the recording data outputted from the encode processing system in the encode/decode unit 12 is also outputted from a branch point to an illegality detecting circuit 30.

As will be described later in detail, the illegality detecting circuit 30 extracts CPR_MAI as copyright protecting information from the structure of recording data shown in FIG. 5, and then detects illegality of contents of CPR_MAI. When the illegality detecting circuit 30 obtains a result of the detection indicating illegality, the illegality detecting circuit 30 changes the switch circuit 34 from an ON state to an OFF state. The operation of the illegality detecting circuit 30 is realized by hardware.

Each circuit part forming the encode/decode unit 12 in the actual disk drive apparatus 0 of the present embodiment is formed as hardware incorporated in an LSI. The illegality detecting circuit 30 and the switch circuit 34 are also incorporated in the same LSI as the encode/decode unit 12, for example. As an actual hardware configuration, a circuit portion shown as an LSI 50 enclosed by a broken line in FIG. 1 is mounted so as to be included in one LSI.

The recording pulse generating unit 21 converts the recording data outputted from the encode processing system in the encode/decode unit 12 into recording pulses (laser driving pulses), and then outputs the recording pulses to the laser driver 18.

The recording pulse generating unit 21 also performs recording compensation, that is, adjustment of a laser drive pulse waveform and fine adjustment of optimum recording power to characteristics of a recording layer, spot shape of the laser light, recording linear velocity and the like.

The laser driver 18 provides a drive current based on the laser driving pulses supplied thereto to the laser diode 4 and thereby drives the laser diode 4 to emit laser light. Thereby pits (dye change pits/phase change pits) corresponding to the recording data are formed on the disk 100.

An APC (Auto Power Control) circuit 19 is a circuit unit for controlling laser output at a constant level without depending on the temperature and the like while monitoring laser output power through output of the monitoring detector 22. The APC circuit 19 is supplied with a target value of the laser output from the system controller 10, and controls the laser driver 18 so that the laser output level reaches the target value.

The servo circuit 35 generates various servo drive signals for focus, tracking, and the sled from the focus error signal FE and the tracking error signal TE from the matrix circuit 9, and thereby performs servo operation.

Specifically, the servo circuit 35 generates a focus drive signal FD and a tracking drive signal TD in response to the focus error signal FE and the tracking error signal TE, and then supplies the focus drive signal FD and the tracking drive signal TD to a two-axis driver 16'. The two-axis driver 16' drives a focus coil and a tracking coil of the two-axis mechanism 3 in the pickup 1. Thereby a tracking servo loop and a focus servo loop are formed by the pickup 1, the matrix circuit 9, the servo circuit 35, the two-axis driver 16', and the two-axis mechanism 3.

In response to a track jump instruction from the system controller 10, the tracking servo loop is turned OFF and a jump drive signal is outputted to the two-axis driver 16' to thereby perform track jump operation.

The servo circuit 35 generates a sled drive signal on the basis of a sled error signal obtained as a low-frequency component of the tracking error signal TE, access control from the system controller 10 and the like, and then supplies the sled drive signal to a sled driver 36. The sled driver 36 drives the sled mechanism 8 according to the sled drive signal. Though not shown, the sled mechanism 8 has a mechanism formed by a main shaft for holding the pickup 1, a sled motor, a transmission gear, and the like. The sled driver 36 drives the sled motor 8 according to the sled drive signal, whereby a required slide movement of the pickup 1 is effected.

The spindle servo circuit 23 controls rotation of a spindle motor 6 by a predetermined rotation control method.

The spindle servo circuit 23 at the time of data recording obtains the wobble clock WCK generated by the wobble PLL as information on current rotational speed of the spindle motor 6, and compares the information with predetermined CLV reference speed information to thereby generate a spindle error signal SPE.

At the time of data reproduction, the reproduced clock (clock as a reference for decode processing) generated by the PLL within the encode/decode unit 12 serves as the information on the current rotational speed of the spindle motor 6. Hence, the spindle servo circuit 23 generates the spindle error signal SPE by comparing this information with the predetermined reference rotational speed information.

The spindle servo circuit 23 then supplies a spindle drive signal generated according to the spindle error signal SPE to a spindle motor driver 17. The spindle motor driver 17 applies a three-phase drive signal, for example, in accordance with the spindle drive signal to the spindle motor 6 to thereby rotation-drive the spindle motor 6.

Further, the spindle servo circuit 23 generates a spindle drive signal in response to a spindle kick/brake control signal from the system controller 10 so that the spindle motor driver 17 performs operations such as starting, stopping, accelerating, and decelerating the spindle motor 6.

The various operations of the servo system and the recording and reproducing system as described above are controlled by the system controller 10 formed by a microcomputer.

The system controller 10 performs various processing in response to commands from the host computer 40.

For example, when a read command requesting transfer of certain data recorded on the disk 100 is supplied from the host computer 40, the system controller 10 first effects seek operation control aiming at an address specified. Specifically, the system controller 10 issues a command to the servo circuit 35 to effect access operation of the pickup 1 targeting the address specified by a seek command.

Then, the system controller 10 effects operation control necessary to transfer data of the specified data section to the host computer 40. Specifically, the system controller 10 effects reading of the data from the disk 100, decoding, buffering, and the like, and then transfers the requested data.

When a write command is issued from the host computer 40, the system controller 10 first moves the pickup 1 to an address where writing is to be performed. Then the system controller 10 makes the encode/decode unit 12 subject data transferred thereto from the host computer 40 to the encode processing as described above.

Laser driving pulses are then supplied from the recording pulse generating unit 21 to the laser driver 18 as described above, whereby recording is performed.

While the disk drive apparatus 0 in the example of FIG. 1 is connected to the host computer 40, there can be an embodiment in which a disk drive apparatus according to the present invention is not connected to the host computer 40 or the like. In such a case, an operation unit and a display unit are provided, and the configuration of an interface part for data input and output is different from that of FIG. 1. That is, it suffices to perform recording and reproduction in response to an operation by a user and form a terminal part for inputting and outputting various data.

The illegality detecting circuit 30 provided in the recording signal processing system in the disk drive apparatus 0 shown in FIG. 1 will next be described.

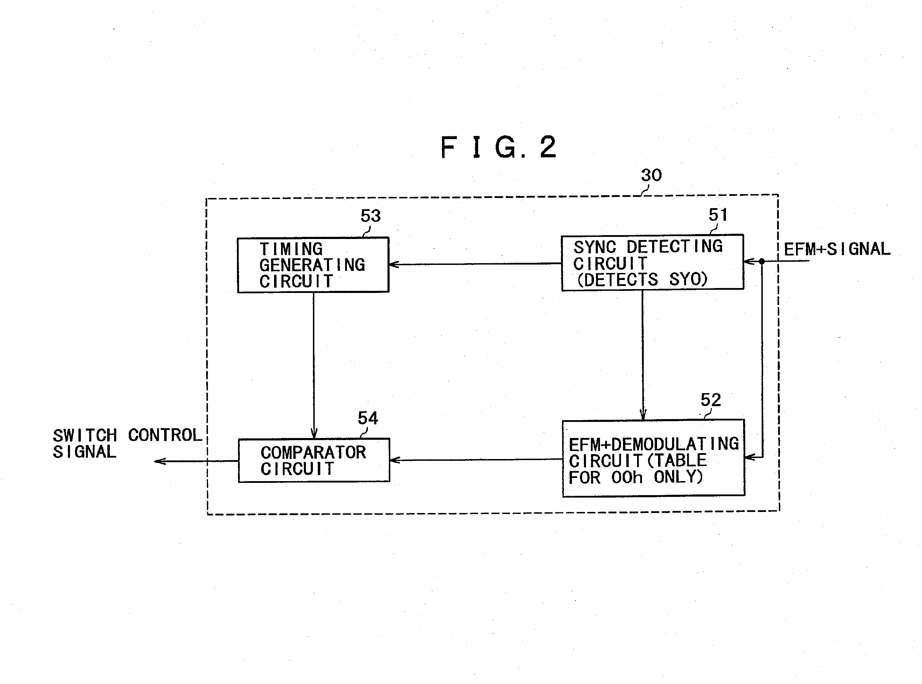

FIG. 2 is a block diagram showing an example of circuit configuration of the illegality detecting circuit 30. As shown in FIG. 2, the illegality detecting circuit 30 includes a sync detecting circuit 51, an EFM+ demodulating circuit 52, a timing generating circuit 53, and a comparator circuit 54. As will be described later, the illegality detecting circuit 30 detects CPR_MAI inserted in input recording data, and determines whether the recording data is illegal (copy data). In practice, each of the circuits is mounted as hardware within the LSI 50.

The recording data outputted from the encode/decode unit 12 is in the form of an EFM+ signal. That is, the recording data has the data structure shown in FIG. 5. The EFM+ signal is inputted to the sync detecting circuit 51 and the EFM+ demodulating circuit 52 of the illegality detecting circuit 30.

A position of CPR_MAI inserted in the data structure of the EFM+ signal shown in FIG. 5 will now be described.

As described above, the sector shown in FIG. 4 is scrambled before ECC encoding. However, Data ID, IED, and CPR MAI disposed at the head of the sector are a data portion not scrambled in the format.

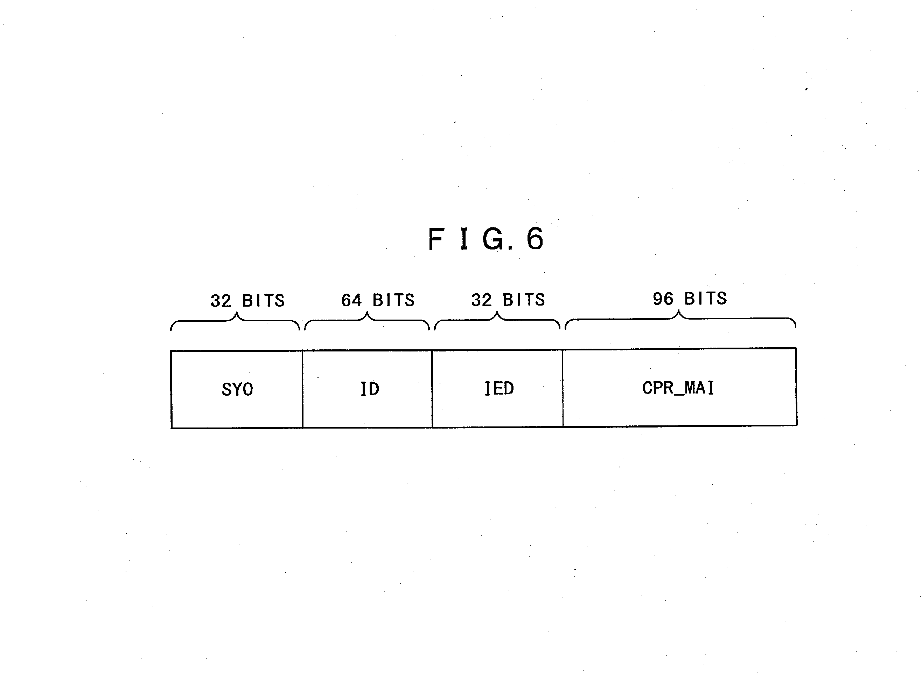

Consequently Data ID, IED, and CPR_MAI are disposed as shown in FIG. 6 in the EFM+ signal shown in FIG. 5.

Specifically, Data ID, IED, and CPR_MAI are stored within a sync frame having a sync code SY0 (32 bits) added thereto in the first row. First, Data ID of 64 bits (8 bytes) is disposed following the sync code SY0. Following Data ID, 32 bits (IED) is disposed. Then, CPR_MAI of 96 bits (12 bytes) is disposed behind IED.

Incidentally, in the sector structure shown in FIG. 4, Data ID is four bytes, IED is two bytes, and CPR_MAI is six bytes, whereas in FIG. 6, Data ID is eight bytes, IED is four bytes, and CPR_MAI is 12 bytes; thus the data sizes are doubled. This is because EFM+ modulation (8/16 modulation) doubles data size per symbol.

The sync detecting circuit 51 shown in FIG. 2 detects the sync code SY0 from the EFM+ signal inputted thereto.

The sync detecting circuit 51 in the present embodiment does not need to be configured so as to be able to detect all of sync codes SY0 to SY7, for example. That is, it suffices to implement, by hardware, a configuration to produce a detection output only at the time of coincidence with a unique bit pattern as the sync code SY0.

Further, in this case, since the signal to be recorded onto the disk 100 is inputted, the sync detecting circuit 51 does not need to be configured for so-called sync protection to deal with a missing signal and errors as in sync detection from a reproduced signal.

The sync detecting circuit 51 may therefore have a very simple circuit configuration.

When the sync code SY0 is detected by the sync detecting circuit 51, the detection output is outputted to the EFM+ demodulating circuit 52 and the timing generating circuit 53.

The EFM+ signal outputted from the EFM+ modulating circuit 16 in the encode/decode unit 12 is inputted from a branch point to the EFM+ demodulating circuit 52. The EFM+ demodulating circuit 52 performs EFM demodulation processing in timing corresponding to the detection output from the sync detecting circuit 51.

As described earlier, when copying is prohibited, CPR_MAI is other than ALL0. Accordingly, it suffices for the EFM+ demodulating circuit 52 to have only a conversion table corresponding to 00h and have only a function of properly demodulating only an EFM+ signal to be demodulated into 00h. In other words, a hardware configuration corresponding to a conversion table for other than 00h is not required. Therefore, the EFM+ demodulating circuit 52 can also be realized by a very simple circuit configuration.

The signal demodulated by the EFM+ demodulating circuit 52 is outputted to the comparator circuit 54.

In response to the detection output inputted to the timing generating circuit 53 from the sync detecting circuit 51, the timing generating circuit 53 generates a timing signal corresponding to a six-byte period when CPR_MAI is obtained as the demodulated output of the EFM+ demodulating circuit 52, and then outputs the timing signal to the comparator circuit 54.

The timing generating circuit 53 can also be configured simply by a counter that counts bit clocks or the like. A counter value may be set in consideration of for example a time lag between a time of detection of a sync code SY0 in the sync detecting circuit 51 and a start of output of CPR_MAI in the EFM+ demodulating circuit 52, and the data size of CPR_MAI, which is six bytes.

The comparator circuit 54 determines whether the signal outputted from the EFM+ demodulating circuit 52 is all zero in a period when the timing signal is inputted to the comparator circuit 54. That is, the comparator circuit 54 determines whether CPR_MAI in the form of six-byte data as a result of the EFM+ demodulation processing is ALL0. Such operation can also be obtained by a circuit configuration as a simple comparator, for example.

The comparator circuit 54 effects ON/OFF control of the switch circuit 34 shown in FIG. 1 according to a result of the determination. This ON/OFF control does not depend on the control of the system controller 10, and is obtained as operation completed by hardware configuration. Thus, the comparator circuit 54 may effect ON/OFF control of a gate circuit as the switch circuit 34 by switching a signal output to H/L level, for example.

When a result of the determination by the comparator circuit 54 indicates that CPR_MAI is ALL0, it means that the data to be recorded this time is not an illegal copy. In this case, the comparator circuit 54 maintains the switch circuit 34 in an ON state. When the switch circuit 34 is in the ON state, the recording data outputted from the EFM+ modulating circuit in the encode/decode unit 12 is inputted to the recording pulse generating circuit 21, so that the data is normally recorded onto the disk 100.

When CPR_MAI is not ALL0, on the other hand, it means that the data is not allowed to be copied.

For example, with data of contents of a movie or the like recorded on a DVD-ROM, CPR_MAI indicating prohibition of copying is generally recorded for copyright protection. The data with the recorded CPR_MAI indicating the prohibition of copying is processed so as not to be copied by an application on the host computer 40 side or the system controller 10 on the disk drive apparatus 0 side, for example.

When data of contents of a movie or the like is to be illegally copied by passing these mechanisms, the illegality detecting circuit 30 in the disk drive apparatus 0 of the present embodiment performs the above operation, and thereby the comparator circuit 54 determines that CPR_MAI is not ALL0. That is, the comparator circuit 54 determines that illegal copying is being attempted.

In this case, the comparator circuit 54 changes the switch circuit 34 to an OFF state. Thereby the recording data outputted from the EFM+ modulating circuit in the encode/decode unit 12 is not inputted to the recording pulse generating circuit 21, so that the data is not recorded onto the disk 100. That is, the illegal copying of the data is prohibited by preventing the recording of the data onto the disk.

As described above, the present embodiment allows data recording when CPR_MAI is ALL0, and prohibits data recording when CPR_MAI is not ALL0, whereby creation of an illegally copied disk is prevented.

The present embodiment performs such operation for prohibiting illegal copying by the illegality detecting circuit 30 formed as hardware. This operation is constantly performed as long as recording data is supplied to the recording signal path. Therefore, it is not possible to pass over this illegality detection.

As described as a conventional problem, for example, when a similar operation for prohibiting illegal copying is realized by processing of the system controller 10 or the like by software, the possibility of illegal copying by altering the software cannot be eliminated.

In the case of the present embodiment, on the other hand, a configuration for prohibiting illegal copying is incorporated as hardware and the prohibition of illegal copying is completed by the operation of the circuits as hardware. Therefore, the possibility of illegal copying by altering the software as described above is eliminated completely.

Further, since the illegality detecting circuit 30 is for example incorporated as hardware together with the encode circuit system of the encode/decode unit 12 within the same LSI, the illegality detection operation is closed within the LSI. It is therefore impossible to bypass the illegality detection operation by modifying the hardware. As long as the LSI having the illegality detection function as the present embodiment is used, it is possible to attain a level where even an engineer capable of designing a disk drive apparatus supporting DVD, for example, cannot modify the disk drive apparatus so that the disk drive apparatus can record illegal CPR_MAI.

Further, the detection operation by the illegality detecting circuit in the present embodiment is performed on a signal after being subjected to modulation processing conforming to the DVD format by the DVD modulating circuit 15 and recording-encoding processing (modulation processing) by the EFM+ modulation. Thus, it can be said that the illegality detection is performed at a part as near to the disk as possible in the recording signal path.

For example, a comparison will be made between a degree of difficulty in illegal operation on a signal at the buffer memory 31 or the circuit portion of the encoder system of the encode/decode unit 12 and a degree of difficulty in illegal operation on a signal outputted from the circuit portion of the encoder system of the encode/decode unit 12. In this case, though the former case presents a considerable difficulty in performing the illegal operation, the latter case presents a much higher degree of difficulty. Thus, the latter provides solider protection, and the present embodiment uses the latter configuration.

In addition, as described earlier, each of the circuit parts forming the illegality detecting circuit 30 shown in FIG. 2 is very simple and small in scale. Thus, there is virtually no increase in cost as a result of addition of the illegality detecting circuit 30, for example. That is, a very powerful copyright protecting function can be implemented without regard to increase in cost.

The illegality detecting circuit 30 described above with reference to FIG. 2 is configured to prohibit copying when CPR_MAI is other than ALL0. The present embodiment is not limited to this; as long as contents of CPR_MAI to prohibit recording are determined in advance, for example, the timing generating circuit, the comparator circuit, and the EFM+ demodulating circuit may be configured according to conditions in that case.

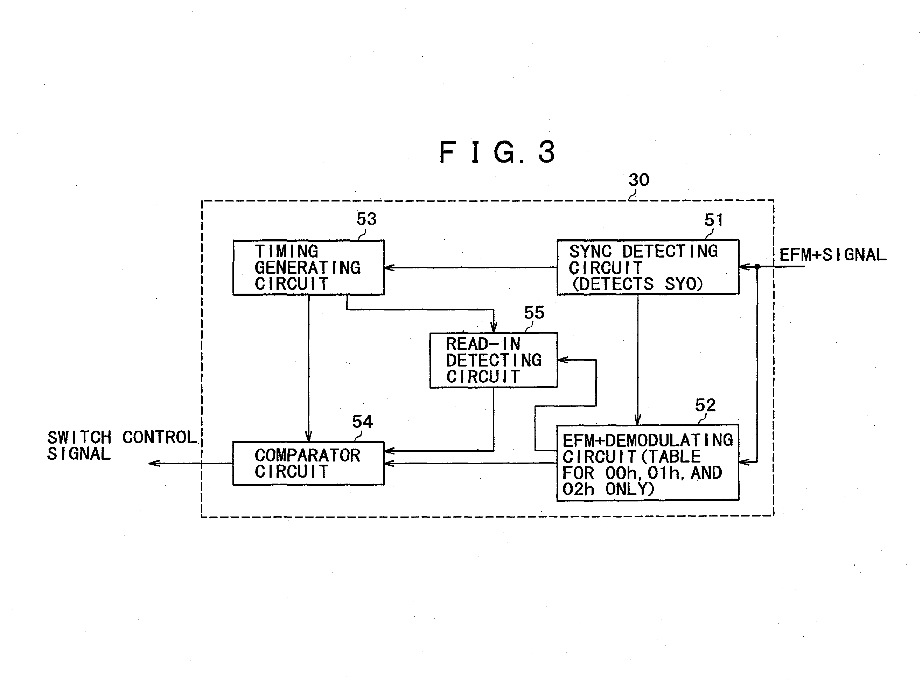

Accordingly, as an example of realizing copy prohibiting operation adapted to contents of CPR_MAI, another example of configuration of the illegality detecting circuit 30 is shown in FIG. 3. In FIG. 3, the same parts as in FIG. 2 are identified by the same reference numerals, and their description will be omitted.

The illegality detecting circuit 30 shown in FIG. 3 has a read-in detecting circuit 55 in addition to the configuration of the illegality detecting circuit 30 shown in FIG. 2.

As is well known, a disk structure of a DVD includes a read-in area situated on an innermost circumference side and a data area situated on the periphery of the read-in area. The defined contents of CPR_MAI may differ between the read-in area and the data area. Accordingly, the read-in detecting circuit 55 is provided to determine whether recording data is to be recorded in the read-in area or the data area.

Rules for prohibition of illegal copying according to the difference in defined contents between the areas are defined as follows.
"Read-in area: When at least data of one byte of six-byte CPR_MAI is other than 00h, data recording is prohibited."
"Data area: A first byte of six-byte CPR_MAI may be other than 00h. When at least data of one byte of the remaining subsequent five bytes is other than 00h, data recording is prohibited."

In correspondence with the rules, the illegality detecting circuit 30 shown in FIG. 3 operates as follows.

An EFM+ signal recorded in the read-in area and an EFM+ signal recorded in the data area both have the same structure shown in FIG. 5 and FIG. 6.

Accordingly, as in FIG. 2, a sync detecting circuit 51 detects a sync code SY0, and outputs a detection output to an EFM+ demodulating circuit 52 and a timing generating circuit 53.

The EFM+ demodulating circuit 52 in this case is configured to perform EFM+ demodulation processing for three patterns of 00h, 01h, and 02h so that the read-in detecting circuit 55 detects a read-in area, as will be described later, rather than perform only demodulation processing for 00h in correspondence with CPR_MAI of ALL "0." The EFM+ demodulating circuit 52 in this case is larger in circuit scale than the EFM+ demodulating circuit 52 shown in FIG. 2. Even so, as compared with a case where a conversion table for all of 00h to FFh is provided for demodulation processing, the scale is much smaller.

Whether recording data is to be recorded in the read-in area or the data area can be determined by referring to Data ID. Though detailed description of the defined contents will be omitted, when Data ID indicates a value of 030000h or more, the recording data is to be recorded in the data area, whereas when Data ID indicates a value of less than 030000h, the recording data is to be recorded in the read-in area. In this case, it is not necessary to check all four bytes of Data ID. It may be determined that when the first one byte is either 00h, 01h, or 02h, the recording data is to be recorded in the read-in area, and that when the first one byte is another value, the recording data is to be recorded in the data area.

As shown in FIG. 6, Data ID comes immediately after the sync code SY0. The timing generating circuit 53 in this case is accordingly configured to output a timing signal in correspondence with a period when a first byte of Data ID is demodulated and outputted from the EFM+ demodulating circuit 52.

In timing based on input of the timing signal corresponding to the first one byte of Data ID as described above, the read-in detecting circuit 55 detects whether the data of the one byte is either 00h, 01h, or 02h, or another value. When the data of the one byte is either 00h, 01h, or 02h, the read-in detecting circuit 55 outputs, to a comparator circuit 54, a detection signal indicating that the recording data is to be recorded in the read-in area. When the data of the one byte is a value other than 00h, 01h, or 02h, the read-in detecting circuit 55 outputs, to the comparator circuit 54, a detection signal indicating that the recording data is to be recorded in the data area.

When the detection signal indicating the read-in area is inputted from the read-in detecting circuit 55, the comparator circuit 54 determines whether each byte of input six-byte CPR_MAI is 00h in timing based on a timing signal from the timing generating circuit 53.

When the comparator circuit 54 determines that each byte is 00h (ALL0), the comparator circuit 54 outputs a switch control signal for bringing the switch circuit 34 into an ON state, thereby allowing data recording.

On the other hand, when the comparator circuit 54 obtains a result of the determination indicating that data of at least one byte of the six bytes has a value other than 00h, the comparator circuit 54 outputs a switch control signal for bringing the switch circuit 34 into an OFF state, thereby prohibiting data recording.

When the detection signal indicating the data area is inputted from the read-in detecting circuit 55, the comparator circuit 54 uses only the five bytes in the rear for determination in making the determination in timing based on a timing signal from the timing generating circuit 53. That is, even when the first one byte of input six-byte CPR_MAI is a value other than 00h, the comparator circuit 54 does not change the switch circuit 34 to an OFF state. When at least data of one byte of the remaining subsequent five bytes has a value other than 00h, the comparator circuit 54 changes the switch circuit 34 to an OFF state, thereby prohibiting data recording. On the other hand, when the comparator circuit 54 obtains a result of the determination indicating that the remaining subsequent five bytes are all 00h, the comparator circuit 54 maintains the switch circuit 34 in an ON state, thereby allowing data recording to be normally performed.

In practice, even when illegality detection is performed in a stage preceding the EFM+ modulating circuit 16, for example, the copy protection is considerably solid and tampering is extremely difficult. Accordingly, the present embodiment can also be configured to perform illegality detection on a signal obtained between an output of the DVD modulating circuit 15 and an input of the EFM+ modulating circuit 16.

In this case, sync codes SY0 to SY7 are not added to the structure of data outputted from the DVD modulating circuit 15. Hence, the illegality detecting circuit 30 in this case cannot use the sync detecting circuit 51 for detecting the bit pattern of the sync code SY0 as shown in FIG. 2. However, when data is outputted from the DVD modulating circuit 15, break information indicating a data break position corresponding to a sync code shown in FIG. 5, for example, is also transferred so that the EFM+ modulating circuit 16 properly determines the data break and performs EFM+ modulation processing. By referring to the break information, the EFM+ modulating circuit 16 can perform the EFM+ modulation properly and insert a sync code in a proper position.

Thus, when illegality detection is performed on CPR_MAI included in a signal outputted from the DVD modulating circuit 15, a detecting circuit for detecting the break information may first be provided. Then, the timing generating circuit 53 outputs to the comparator circuit 54 a timing signal for making determination on CPR_MAI in response to the detection of the break information. The comparator circuit 54 may determine whether the CPR MAI has a required value.

Incidentally, in this case, since the signal outputted from the DVD modulating circuit 15 is data in a form before the EFM+ modulation, the EFM+ demodulating circuit 52 is omitted.

The present invention is not limited to the embodiment described thus far. For example, the foregoing embodiment disconnects a part of the recording signal path so that recording data including illegal copyright protecting information (CPR_MAI) is not recorded on the recording medium. That is, the switch circuit 34 is turned OFF. The position where the recording signal path is disconnected is a part of signal output of the EFM modulating circuit 16, as is shown in FIG. 1. However, since it suffices for the present invention to prevent recording data including illegal copyright protecting information (CPR_MAI) from being recorded on the recording medium, any part of the recording signal path may be disconnected.

Further, from a viewpoint of preventing recording data including illegal copyright protecting information (CPR_MAI) from being recorded on the recording medium, it can be said that normal recording data may be prevented from being recorded on the recording medium. Accordingly, instead of the ON/OFF control of the switch circuit, scrambling processing for randomly scrambling the recording data, for example, may be performed when the illegality detecting circuit determines that the copyright protecting information is illegal.

Further, for example, while in the foregoing embodiment, a recording and reproducing apparatus supporting a recordable optical disk in a DVD format is taken as an example, the recording and reproducing apparatus may support other optical disks and also magneto-optical disks and the like. The present invention may also be applied to recording apparatus that can record tape-shaped recording media, semiconductor memory devices, and the like.

While a preferred embodiment of the invention has been described using specific terms, such description is for illustrative purposes only, and it is to be understood that changes and variations may be made without departing from the scope of the following claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

In the drawings:
FIG. 1
   0: DISK DRIVE APPARATUS
   8: SLED MECHANISM
   9: MATRIX CIRCUIT
   10: SYSTEM CONTROLLER
   11: BINARIZING CIRCUIT
   12: ENCODE/DECODE UNIT
   13: EFM+ DEMODULATING CIRCUIT
   14: DVD DEMODULATING CIRCUIT
   15: DVD MODULATING CIRCUIT
   16: EFM+ MODULATING CIRCUIT
   16': TWO-AXIS DRIVER
   17: SPM DRIVER
   18: LASER DRIVER
   21: RECORDING PULSE GENERATING UNIT
   23: SPINDLE SERVO CIRCUIT
   24: WOBBLE EXTRACTING UNIT
   25: WOBBLE PLL
   26: ADDRESS DECODER
   27: ENCODE CLOCK GENERATING UNIT
   28: WOBBLE COMPONENT DETECTING UNIT
   30: ILLEGALITY DETECTING CIRCUIT
   32: BUFFER MANAGER
   35: SERVO CIRCUIT
   36: SLED DRIVER
   40: HOST COMPUTER
FIG. 2
   2-1: EFM+ SIGNAL
   2-2: SWITCH CONTROL SIGNAL
   30: ILLEGALITY DETECTING CIRCUIT
   51: SYNC DETECTING CIRCUIT (DETECTS SY0)
   52: EFM+ DEMODULATING CIRCUIT (TABLE FOR 00h ONLY)
   53: TIMING GENERATING CIRCUIT
   54: COMPARATOR CIRCUIT
FIG. 3
   3-1: EFM+ SIGNAL
   3-2: SWITCH CONTROL SIGNAL
   30: ILLEGALITY DETECTING CIRCUIT
   51: SYNC DETECTING CIRCUIT (DETECTS SY0)
   52: EFM+ DEMODULATING CIRCUIT (TABLE FOR 00h, 01h, and 02h ONLY)
   53: TIMING GENERATING CIRCUIT
   54: COMPARATOR CIRCUIT
   55: READ-IN DETECTING CIRCUIT

## Claims

1. An information detecting device comprising:
input means for inputting recording information modulated by a modulating circuit; and
information detecting means for detecting whether copyright protecting information inserted in a predetermined position of said recording information inputted by said input means has a predetermined content.

2. An information detecting device as claimed in claim 1,
wherein said information detecting means includes:
a specific information detecting circuit for detecting information of a specific bit pattern inserted in a predetermined position of said recording information; and
a detecting circuit for extracting said copyright protecting information from said recording information and detecting whether said copyright protecting information has the predetermined content on the basis of detection timing of said specific information detecting circuit.

3. An information detecting device as claimed in claim 1,
wherein said information detecting means includes:
a specific information detecting circuit for detecting information of a specific bit pattern inserted in a predetermined position of said recording information;
a demodulating circuit for demodulating said copyright protecting information on condition that said copyright protecting information extracted from said recording information is predetermined information according to detection timing of said specific information detecting circuit; and
a detecting circuit for detecting whether said copyright protecting information demodulated by said demodulating circuit has said predetermined content.

4. An information detecting device as claimed in claim 1,
wherein said information detecting means receives recording information encoded by said modulating circuit.

5. An information detecting device as claimed in claim 1,
wherein said information detecting means is mounted within an integrated circuit together with said modulating circuit.

6. A recording apparatus comprising:
a modulating circuit for subjecting input recording information to predetermined modulation processing;
an information detecting circuit for receiving the recording information modulated by said modulating circuit to detect whether copyright protecting information inserted in a predetermined position of the recording information has a predetermined content;
recording means for recording the recording information inputted through a recording signal path, there is said modulating circuit, onto a predetermined recording medium; and
an information recording limiting circuit for prohibiting the recording of recording information in which illegal copyright protecting information is inserted onto said recording medium by said recording means, according to a detection result of said information detecting circuit.

7. A recording apparatus as claimed in claim 6,
wherein said information recording limiting circuit disconnects a predetermined part of the recording signal path for recording said recording information onto said recording medium according to the detection result of said information detecting circuit.

8. A recording apparatus as claimed in claim 6,
wherein said information detecting circuit includes:
a specific information detecting circuit for detecting information of a specific bit pattern inserted in a predetermined position of said recording information; and
a detecting circuit for extracting said copyright protecting information from said recording information and detecting whether said copyright protecting information has the predetermined content on the basis of detection timing of said specific information detecting circuit.

9. A recording apparatus as claimed in claim 6,
wherein said information detecting circuit includes:
a specific information detecting circuit for detecting information of a specific bit pattern inserted in a predetermined position of said recording information;
a demodulating circuit for demodulating said copyright protecting information on condition that said copyright protecting information extracted from said recording information is predetermined information according to detection timing of said specific information detecting circuit; and
a detecting circuit for detecting whether said copyright protecting information demodulated by said demodulating circuit has said predetermined content.

10. A recording apparatus as claimed in claim 6,
wherein said modulating circuit performs modulation processing for encoding said recording information by a predetermined method.

11. A recording apparatus as claimed in claim 6,
wherein said information detecting circuit is mounted together with at least said modulating circuit within an identical integrated circuit.
